# EUROPEAN PATENT APPLICATION

(11) **EP 3 078 278 A1**
(43) Date of publication of application: **12.10.2016**
(21) Application number: 16164510.6
(22) Date of filing: 08.04.2016
(51) Int. Cl.: A23L 17/00, A23L 13/00, A23L 13/50, A23L 19/20, A23L 29/256, A23L 29/212

(54) **STABILISATION OF HEATED FOOD SUBSTRATES**

(30) Priority: 10.04.2015 EP 15163191
(71) Applicant: Crisp Sensation Holding S.A., 1208 Geneva (CH)
(72) Inventor: Michiels, Wilhelmus Johannes Gerardus, 6035 AW Ospel (NL); Van Der Kolk, Bianca, 5215 BL's-Hertogenbosch (NL)
(74) Representative: Browne, Robin Forsythe

(57) **Abstract**

A method of manufacture of a food product comprising wholly or partially impregnating a substrate with a stabiliser composition wherein the substrate comprises pieces of: meat, poultry, fish, vegetable, fruit or dairy food;
wherein the stabiliser composition comprises the following ingredients:
5wt% to 30wt% of one or more gums selected from the group consisting of one or more carrageenan gums and optionally one or more of: locust bean gum; guar gum; xanthan gum, gellan gum, gum Arabic and agar agar, calculated by weight of dry matter;
salt selected from sodium chloride, potassium chloride and combinations thereof in a concentration of 0wt% to 50wt%, calculated by weight of dry matter;
one or more polyglucose components selected from the group consisting of maltodextrin; polydextrose; starch and combinations thereof in a concentration of 20wt% to 60wt%, calculated by weight of dry matter;
a phosphate component in a concentration of 0wt% to 7.4wt%, calculated by weight of dry matter; and
optional further edible ingredients in a concentration of 0wt% to 40wt%, calculated by weight of dry matter;
wherein the concentration ranges given add up to total 100wt%.

## Description

This invention relates to food products which are stabilised to retain moisture during cooking or reheating in a microwave or thermal oven. This invention relates particularly but not exclusively to food products comprising a substrate or core and a surrounding coating, for example a breaded or battered product. The invention also relates to non-coated food products and to stabiliser compositions for use in manufacture of such products. The invention further relates to methods of stabilisation of the food products. In particular embodiments of the invention the core comprises a meat product, especially whole muscle or bone-in meat.

This invention finds particular but not exclusive application in relation to products which are cooked or reheated in a thermal oven. The products may be also cooked or reheated in a combination microwave-thermal oven, or an air fryer or in a microwave oven.

Many food materials, for example natural muscle of poultry, fish or red meat, vegetable or processed foods contain a large percentage of water. Most fresh foods contain more than 60% water. Some of this water is bound, that is tightly attached to the constituent cells. The remaining mobile water is available and can be frozen. If a food product is frozen to a core temperature of between -1°C and -30°C or lower and is irradiated in a microwave oven, the microwave energy will be primarily absorbed by the frozen available water. Whereas in conventional cooking heat is applied from the exterior, in microwave cooking heat is generated from within. The process of heating can be very rapid so that available water is converted into steam. When a food product is allowed to stand after heating in a microwave oven, water can continue to be expelled from the product. This is particularly noticeable for example when heating frozen fish muscle. The loss of water causes any food coating, particularly a batter, pastry or breadcrumb coating to become soggy and unpalatable. In addition the core of the substrate may become dry due to the loss of water.

Attempts have been made to limit the escape of moisture during microwave cooking by coating the product with a composition which forms an impermeable film. This is unsatisfactory because the natural distribution of water within the coated product is lost through any coating as steam and due to internal pressure. Furthermore an impenetrable coating or film is detrimental to the taste and mouth feel of the product.

WO97/03572 discloses a method of stabilising a microwave cookable or reheatable food material by impregnation of the product with a stabiliser composition comprising cellulose gum, modified starch, polydextrose, xanthan gum, egg albumen and pea starch.

Products which are cooked or reheated in a thermal oven or microwave/thermal combination oven also require stabilisation to prevent loss of moisture while retaining succulence. It is convenient if the same stabiliser and process for use can be employed for both microwave and thermal applications.

According to a first aspect of the present invention a method of manufacture of a food product comprises wholly or partially impregnating a substrate with a stabiliser composition wherein the substrate comprises pieces of: meat, poultry, fish, vegetable, fruit or dairy food;
wherein the stabiliser composition comprises:
5wt% to 30wt% of one or more gums selected from the group consisting of one or more of carrageenan gums and optionally one or more of: locust bean gum; guar gum; xanthan gum, gellan gum, gum Arabic and agar agar, calculated by weight of dry matter;
salt selected from sodium chloride, potassium chloride and combinations thereof in a concentration of 0wt% to about 50wt%, calculated by weight of dry matter;
one or more polyglucose components selected from the group consisting of maltodextrin; polydextrose; starch and combinations thereof in a concentration of about 20wt% to about 60wt%, calculated by weight of dry matter;
a phosphate component in a concentration of 0wt% to about 7.4wt%, calculated by weight of dry matter; and
optional further edible ingredients in a concentration of 0wt% to about 40wt%, calculated by weight of dry matter;
wherein the concentration ranges given add up to total 100wt%.

According to a second aspect of the present invention, there is provided a food product comprising a substrate impregnated with a stabiliser composition by a method in accordance with the first aspect of this invention.

The invention finds particular application with meat substrates, especially whole muscle or bone-in meat substrates. In particularly advantageous embodiments the substrate may comprise whole muscle meat, such as chicken breast. Alternatively the substrate may comprise bone-in chicken, leg or wing portions or meat chops.

The stabiliser composition may be provided as an aqueous composition, preferably with a dry matter content of about 20wt% to about 40wt%, more preferably about 30wt% to about 35wt%, typically about 30wt% or about 34wt%.

The aqueous stabiliser composition is preferably a free flowing or non-viscous liquid to facilitate penetration into the substrate by permeation or injection as described below.

The viscosity at 20°C is preferably less than 1000 cP. The viscosity is preferably in the range 1 to 1950 cP, preferably 3 to 1000 cP measured using a Brookfield viscometer with a No. 63 spindle at 60 rpm at 20°C.

Alternatively, the viscosity may be in the range of 4 to 5 secs measuring using a DinCup at 20°C.

Preferred stabilizer compositions in accordance with this invention exhibit an advantageous combination of properties. While the viscosity is sufficiently low to permit administration to a substrate by pumping through the hollow needles of an injector, the compositions have excellent water binding and water retention properties. Water loss from an injected substrate is reduced, so that the substrate retains succulence on cooking or reheating from the frozen or chilled state. Water migration during frozen or chilled storage is reduced so that a crumb or batter coating remains crispy after storage for a longer period. Furthermore, the cooked or reheated product may be maintained in a heated state for a prolonged period between cooking and reheating and serving to a consumer. This facilitates large scale catering or application in transportation environments, for example, in aircraft in which serving and consumption of some of a batch of ingredients may be delayed.

Advantageous stabiliser compositions exhibit low viscosity and beneficial flow properties at temperatures below ambient temperatures such as may be encountered during processing of meat products, for example, in the range -4°C to 25°C, preferably 0°C to 20°C, more preferably 5°C to 15°C.

The one or more gums are preferably present in a concentration, calculated by weight of dry matter, more preferably of about 8wt% to about 18wt%, even more preferably about 10wt% to about 16wt%, yet more preferably about 12wt% to about 14wt%, most preferably about 13wt%.

The one or more gums preferably comprise a mixture of one or more carrageenan gums optionally together with an additional gum, for example locust bean gum or xanthan gum.

A mixture of kappa carrageenan gum and one or more additional gums is preferred, preferably a mixture of kappa carrageenan gum and one additional gum. The additional gum or gums may be selected from iota carrageenan gum, locust bean gum and xanthan gum. Iota carrageenan gum is particularly advantageous.

The choice of relative proportions of the gums used in a formulation influences the properties of the stabiliser composition. In addition to the low viscosity of the composition, any water should be strongly bound by the composition so that a minimum moisture loss can occur. When moisture passes from the gel into the substrate, for example, a chicken portion, or into a coating, for example, a crumb or batter layer, this can result in a product which is soggy and which has reduced crispness.

The preferred ratio of carrageenan gum to an additional gum selected from iota carrageenan gum, locust bean gum and mixtures thereof is in the range 75:25 to 50:50, preferably 75:25 to 60:40. Especially advantageous are mixtures of kappa carrageenan gum and iota carrageenan gum in the ratio 75:25 to 60:40, preferably 70:30 to 60:40, more preferably about 65:35 by weight.

A further advantageous combination of gums comprises kappa carrageenan gum and locust bean gum in a ratio from 75:25 to 50:50, preferably 75:25 to 55:45.

In an alternative embodiment, the one or more gums comprise a mixture of kappa carrageenan gum and iota carrageenan gum in a ratio by weight in the range of about 1:1 to about 5:1, preferably about 2:1 to about 4:1, more preferably about 3:1.

Besides the mixture of kappa carrageenan gum and iota carrageenan gum one or more further gums may be included in the stabilizer composition. For example one or more of: locust bean gum, xanthan gum, gum Arabic or agar agar may be used to increase the firmness of the gel formed by the gum component.

Salt when present may be in a concentration of 10wt% to 50wt%, calculated by weight of dry matter, more preferably of about 20wt% to about 40wt%, even more preferably about 25wt% to about 35wt%, most preferably about 32wt%, calculated by weight of dry matter. Preferably, the salt employed is sodium chloride.

The polyglucose component may serve as a filler and is preferably selected from the group consisting of maltodextrin; polydextrose and mixtures thereof. Especially preferred is maltodextrin. The polyglucose component is preferably present in the stabiliser composition in a concentration, calculated by weight of dry matter, of about 20wt% to about 60wt%, more preferably about 30wt% to about 55wt%, even more preferably about 32wt% to about 55wt%, most preferably 35wt% to about 49wt%. Use of the polyglucose additive helps to reduce the size of crystals formed when the impregnated product is frozen. It has been found that an undesirable reaction occurs when frozen products containing large crystals are reheated. Use of maltodextrin is preferred.

The preferred stabiliser compositions do not include gelatine. Use of gelatine is undesirable as it reacts with water on the surface of a meat or other substrate to form an undesirable sticky layer which would not promote adhesion of any coating layer to the substrate. Gelatin may also block the injector needles.

The phosphate component may be selected from the group consisting of (mono)phosphate, diphosphate, triphosphate, hexametaphosphate, polyphosphate and combination thereof. Preferably the phosphate component is a (mono)phosphate. A suitable mixture is sold under the trade mark Carnal 822. The phosphate component is preferably present in a concentration of 0wt% to 7wt%, calculated by weight of dry matter, more preferably of about 4.3wt% to about 7.4wt%, even more preferably about 5wt% to about 7wt%, more preferably about 6wt% to about 7wt%, most preferably about 6.5wt%, calculated by weight of dry matter.

The composition may optionally further comprise cellulose ether, particularly for use with microwaveable food products.

Where present the cellulose ether concentration is preferably in the range of about 3wt% to about 20wt%, more preferably about 7wt% to about 13wt%, most preferably about 10wt%, calculated by weight on dry matter. Preferably, the cellulose ether is methyl cellulose, for example, Methocel A15.

The stabiliser composition is particularly advantageous with larger dimensioned substrates or bone-in substrates for which permeation into the substrate may be difficult to achieve, particularly when using the previously disclosed more viscous stabilising compositions. Dilution of these compositions to reduce the viscosity also results in a loss of effective stabilisation properties.

A particularly advantageous method may comprise the successive steps of:
a) impregnation;
b) tumbling, preferably vacuum tumbling;
c) application of pre-dust or fine crumb;
d) oven cooking;
e) freezing *(optional*);
f) application of pre-dust or fine crumb;
g) coating with a gel composition or flour containing batter;
h) application of a first crumb layer;
i) application of a second crumb layer *(optional*);
j) frying); and
k) freezing.

In preferred embodiments the step of partially or wholly impregnating the substrate may include the step of injecting the substrate with an array of hollow needles connected to a reservoir containing the stabiliser composition. A multiple needle injector may be employed. Side opening needles are preferably used, for example having a diameter of 2mm.

Preferably the injector has an array of needles which are individually controllable using air pressure. Optiflex (RTM) needles may be used. The needles may be arranged in a fine pattern. A two stroke pattern may be used.

A preferred injector is manufactured under the registered trade mark Gea AccuJector 450.

A minimum amount of the stabiliser composition is preferably impregnated into the substrate so that a minimum amount of water is introduced into the substrate.

The substrate is preferably impregnated with an amount of stabiliser composition of 5wt% to 15wt%, typically about 10wt% by the weight of the stabilised substrate.

For bone-in products and other products, following impregnation, the substrate pieces may be tumbled in a tumble mixer until they are dry. A vacuum tumbler may be used in order to improve penetration into the substrate. The time taken to obtain dry substrate pieces may vary dependent on the nature of the substrate. Larger pieces for example, chicken fillets or drumsticks with a weight about 125g may be tumbled for 30 minutes. Smaller pieces with weights about 50-75g for 20 to 25 minutes. Tumbling for larger periods is not preferred due to possible protein extraction from the meat.

When the tumbled substrate pieces are dry, a pre-dust may be applied. The pre-dust may be a conventional seasoned flour composition.

Preferably, the pre-dust comprises a water resistant powdered crumb resultant from milling crumb which has been extruded with guar gum, xanthan gum or other hydrocolloid, as disclosed in WO2010/001101, the disclosure of which is incorporated into this specification by reference for all purposes.

The pre-dust may have a particle size less than 0.8mm.

The pre-dust coated product is preferably fully cooked, typically using a thermal oven, for example a Gea Cookstar (Registered Trade Mark) oven having a conveyor speed of about 2m/second at 160°C for about 20 minutes, dependent on the size and nature of the product.

For bone-in products, preferably a minimum core temperature of 85°C is achieved to prevent occurrence of bloodspots.

The cooked product may be frozen and is preferably introduced into a freezer before the core temperature of the substrate falls below 65°C, preferably 70°C. The process is disclosed in WO2012/101025, the disclosure of which is incorporated into this specification by reference for all purposes. A gyro freezer at -40°C may be used. The freezing time may be 35 minutes using a conveyor speed of 2.0m/second. A core temperature of -10°C or less should be achieved within a period of 5 minutes, preferably within a period of 2 minutes after removal from the oven. The products may be stored at - 20°C or at a higher temperature such as -4°C.

A predust consisting of a powder or fine particulate coating is preferably applied to the tmepered stabilised substrate pieces, for example at -2°C and 2°C. The composition of the coating may depend on the nature of the intended heating process.

For an ovenable coating system, the coating may comprise a pre-dust consisting of:

| Ingredient | % |
|---|---|
| fine breadcrumbs, less than 0.8mm | 59 |
| wheat starch (Briljant) (RTM) | 40 |
| vegetable oil | 1 |
| Total | 100 |

The crumb may be a gum impregnated crumb manufactured in accordance with the disclosure of WO2010/001101.

The pre-dust coated frozen substrate is preferably coated with an aqueous gel-like coating solution using a tempura applicator. The composition of the solution (referred to as PD8) was:

| Ingredient | % |
|---|---|
| cellulose gum (Methocel A4M) (RTM) | 25.0 |
| modified starch (Thermflo) | 35.0 |
| xanthan gum | 25.0 |
| egg albumen | 15.0 |
| Total | 100.0 |

Alternatively a standard flour containing batter composition may be employed.

The gel coated substrate pieces may be coated with a first layer of gum impregnated crumb manufactured in accordance with WO2010/001101 and having a dimension from 1.5mm to 2.5 mm or 2.0mm to 3.15mm, typically followed by a second infill coating of crumb with a size range of 0.8mm to 1.5mm or 0.8-2.0mm.

The crumb coated product preferably is fried, e.g. in hot oil at 180°C for 2 minutes, and frozen at -40°C using a Gyro freezer. The frozen products may be packaged for storage and distribution.

For a microwavable coating system the frozen cooked products may be coated with an aqueous solution comprising 1% PD8 (mentioned above) following which a first crumb coating with a size less than 0.8mm may be applied followed by a further application of aqueous coating and successive applications of crumb with a dimension from 2.0mm to 3.15mm and 0.8mm to 2.0mm. The crumb coated product may be fried at 180°C for 2 minutes 30 seconds followed by cryogenic freezing and packaging.

For chicken fillets a similar process may be used with injection followed by tumbling until dry, following which the product may be allowed to rest overnight before cooking and freezing as described above.

The products manufactured in accordance with the process described above are crispy and have succulent meat.

A soya batter may be used in place of the PD8 for ovenable products.

The invention is further described by means of example, but not in any limitative sense.

### Example 1

A stabiliser composition was prepared by mixing the following ingredients:

| | |
|---|---|
| kappa carrageenan gum/iota carrageenan gum mixture 65:35 w/w | 13% |
| sodium chloride | 32% |
| maltodextrin | 38.5% |
| sodium phosphate (Carnal 822) (RTM) | 6.5% |
| methyl cellulose (Methocel A15) (RTM) | 10% |
| Total | 100% |

The mixture was dissolved in water to form a solution having a solids content of 34wt% and a viscosity at 20°C of 450 cP to 550 cP measured using a Brookfield viscometer with a No 63 spindle.

20 chicken fillets each having a weight of 125g were placed in a Gea AccuJector (RTM) 450 injector and were injected with the stabiliser solution until a weight increase of 10% was obtained. Following the injection the chicken pieces were placed in a tumble mixer and tumbled for 30 minutes. After this period the pieces had a dry appearance.

A predust was prepared using water resistant dust (particle size < 0.8mm) obtained by milling crumb manufactured in accordance with WO2010/001101 and dried to a water content of 1.5wt%. The impregnated chicken pieces were coated with the predust.

The predust (<0.8mm) coated chicken pieces were cooked at 160°C for about 20 minutes in a Gea Cookstar (RTM) conveyor oven having a conveyor speed of 2m/sec.

The cooked chicken pieces were removed from the oven and were immediately placed into a giro freezer maintained at -40°C. The period between removal from the oven and insertion into the freezer was 1.5 minutes or less. The freezing time was 35 minutes and the conveyor speed was 2m/sec. The core temperature of the product after freezing for two minutes was determined to be -20°C or lower.

A predust coating was applied to the frozen pieces. The predust consisted of

| Ingredient | % |
|---|---|
| fine breadcrumbs, less than 0.8mm | 59%; |

| | |
|---|---|
| wheat starch (Briljant) (RTM) | 40%; |
| vegetable oil | 1%. |
| Total | 100% |

The predust coated pieces were passed through a tempura applicator containing an aqueous coating composition (fully hydrated gel) that was prepared using a powder mixture consisting of:

| | % |
|---|---|
| Modified starch (Thermflo) (RTM) | 35 |
| Thickener Methocel A4M (RTM) | 25 |
| Xanthan gum | 25 |
| Egg albumen | 15 |
| Total | 100 |

The powder mixture was dissolved in water to form a 1% solution, and was left to stand for minimum 1 hour to form a fully hydrated gel.

The pickup of the gel composition was about 6% to 8%. The gel coated pieces were then fried at 180°C for 2 minutes 30 seconds followed by freezing and packaging. Cryogenic freezing is used for microwaveable products. Ovenable products are fried for two minutes before freezing.

## Claims

1. A method of manufacture of a food product comprising wholly or partially impregnating a substrate with a stabiliser composition wherein the substrate comprises pieces of: meat, poultry, fish, vegetable, fruit or dairy food;
wherein the stabiliser composition comprises the following ingredients:
5wt% to 30wt% of one or more gums selected from the group consisting of one or more carrageenan gums and optionally one or more of: locust bean gum; guar gum; xanthan gum, gellan gum, gum Arabic and agar agar, calculated by weight of dry matter;
salt selected from sodium chloride, potassium chloride and combinations thereof in a concentration of 0wt% to 50wt%, calculated by weight of dry matter;
one or more polyglucose components selected from the group consisting of maltodextrin; polydextrose; starch and combinations thereof in a concentration of 20wt% to 60wt%, calculated by weight of dry matter;
a phosphate component in a concentration of 0wt% to 7.4wt%, calculated by weight of dry matter; and
optional further edible ingredients in a concentration of 0wt% to 40wt%, calculated by weight of dry matter;
wherein the concentration ranges given add up to total 100wt%.

2. A method as claimed in claim 1, wherein the stabiliser composition is an aqueous composition with a dry matter content from about 20wt% to about 40wt%, preferably about 30wt% to about 35wt%.

3. A method as claimed in claim 1 or 2, wherein the substrate is whole muscle or bone-in meat.

4. A method as claimed in any preceding claim wherein the one or more gums are present in a concentration, calculated by weight of dry matter, of about 8wt% to about 18wt%, preferably about 10wt% to about 16wt%, more preferably about 12wt% to about 14wt%, most preferably about 13wt%.

5. A method as claimed in any preceding claim wherein the one or more gums comprise a mixture of kappa carrageenan gum and iota carrageenan gum.

6. A method as claimed in in claim 5 wherein the weight ratio of kappa carrageenan gum to iota carrageenan gum is in the range of about 75:25 to 60:40, preferably 70:30 to 60:40; more preferably, about 65:35.

7. A method as claimed in claim 6, wherein the weight ratio of kappa carrageenan gum to iota carrageenan gum is in the range 70:30 to 60:40.

8. A method as claimed in claim 7, wherein the weight ratio of kappa carrageenan gum to iota carrageenan gum is about 65:35.

9. A method as claimed in any preceding claim wherein the polyglucose component is maltodextrin

10. A method as claimed in any preceding claim, wherein the polyglucose component is present in a concentration, calculated by weight of dry matter, in the range from about 30wt% to about 55wt%, more preferably about 32wt% to about 55wt%, most preferably about 35wt% to about 49wt%.

11. A method as claimed in any preceding claim, wherein the stabiliser composition contains 3-30 wt% of cellulose ether, calculated by weight of dry matter.

12. A method as claimed in any preceding claim, wherein the step of impregnating the substrate with a stabiliser composition comprises injecting the substrate with the stabiliser composition, using a multiple needle injector.

13. A method as claimed in claim 12 wherein the substrate is impregnated with 5wt% to 15wt% of the aqueous stabiliser composition, calculated by weight of the stabilised substrate.

14. A method as claimed in claim 11 or 12 further comprising the step of tumbling the impregnated substrate until the exterior of the substrate is dry.

15. A method as claimed in claim 14, wherein the tumbling is vacuum tumbling.

16. A method as claimed in any preceding claim, comprising the successive steps of:-
a) impregnation;
b) tumbling, preferably vacuum tumbling;
c) application of pre-dust or fine crumb;
d) oven cooking;
e) freezing (*optional*);
f) application of pre-dust or fine crumb;
g) coating with a gel composition or flour containing batter;
h) application of a first crumb layer;
i) application of a second crumb layer (*optional*);
j) frying) and
k) freezing.

17. A stabiliser composition comprising the ingredients recited in any preceding claim.

18. A food product comprising a substrate impregnated with a stabiliser composition by a method as claimed in any of claims 1 to 16.
